# FASCICULE DE BREVET EUROPEEN

(11) **EP 0 601 923 B1**
(45) Date de publication et mention de la délivrance du brevet: **19.03.1997**
(21) Numéro de dépôt: 93402946.3
(22) Date de dépôt: 06.12.1993
(51) Int. Cl.: G01P 15/125, G01P 15/00

(54) **Capteur capacitif sensible aux accélérations orientées dans toutes les directions d'un plan**
Kapazitiver Messaufnehmer für Beschleunigungen in allen Richtungen in einer Ebene
Capacitive sensor for accelerations in all directions in one plane

(30) Priorité: 08.12.1992 FR 9214758
(43) Date de publication de la demande: 15.06.1994
(73) Titulaire: COMMISSARIAT A L'ENERGIE ATOMIQUE, 75015 Paris (FR)
(72) Inventeur: Dufour, Michel, F-38000 Grenoble (FR)
(74) Mandataire: Ilgart, Jean-Christophe

(56) Documents cités:
- EP-A- 0 323 709
- EP-A- 0 479 686
- US-A- 4 901 570

## Description

L'invention concerne un capteur capacitif sensible aux accélérations orientées dans toutes les directions d'un plan.

Les capteurs capacitifs comprennent deux électrodes composant un condensateur et dont l'une est placée sur un support fixe et l'autre sur une masselotte mobile et reliée au support par une structure déformable en fonction des accélérations subies. Cette structure peut comprendre un ressort ou un système équivalent. Mais il n'existe apparemment pas de structure de capteur d'accélération capacitif accessible au public qui soit utilisable dans des conditions satisfaisantes pour des accélérations de direction quelconque dans un plan, c'est-à-dire qui soit doté d'une sensibilité uniforme quelle que soit la direction de l'accélération dans le plan ou tout du moins dont la sensibilité soit connue en fonction de la direction de l'accélération et qui indique alors cette direction, afin de pouvoir malgré tout calculer la valeur de l'accélération.

L'invention comble précisément cette lacune et est relative à un capteur qui se caractérise en ce que la masselotte est reliée à un cadre solidaire du support par un système d'ailettes déformables et présentant une raideur d'ensemble identique dans toutes les directions du plan de détection ; le système d'ailettes appartient à ce plan. Il est par ailleurs indéformable perpendiculairement au plan.

Les électrodes peuvent être concentriques selon un axe perpendiculaire au plan, éventuellement planes, et on peut les prévoir circulaires ; ou bien, si on désire non seulement détecter l'accélération mais sa direction, on peut prévoir une électrode de forme oblongue (elliptique, rectangulaire ou en losange par exemple) et divisée en quatre parties par deux axes principaux perpendiculaires de l'électrode.

Les ailettes dotées ensemble de la propriété énoncée ci- dessus seront souvent raccordées obliquement au cadre et à la masselotte ou coudées. Elles pourront être identiques et régulièrement réparties angulairement autour de la masselotte.

On va maintenant passer aux commentaires des figures suivantes annexées à titre illustratif et non limitatif qui représentent certaines réalisations de l'invention :
- la figure 1 représente une vue de dessus d'une réalisation,
- la figure 2 représente une coupe suivant la ligne I-I de la figure 1,
- la figure 3 représente une deuxième réalisation en vue de dessus,
- la figure 4 représente une variante de réalisation,
- la figure 5 représente une vue de dessus d'une troisième réalisation,
- la figure 6 représente une vue d'une quatrième réalisation,
- la figure 7 représente une vue de dessus d'une cinquième réalisation,
- la figure 8 représente une coupe transversale d'une sixième réalisation,
- la figure 9 représente une vue en perspective d'une septième réalisation,
- les figures 10A à 10E représentent un cycle d'étapes de fabrication d'un capteur,
- et les figures 11A à 11G représentent un autre cycle d'étapes de fabrication d'un capteur.

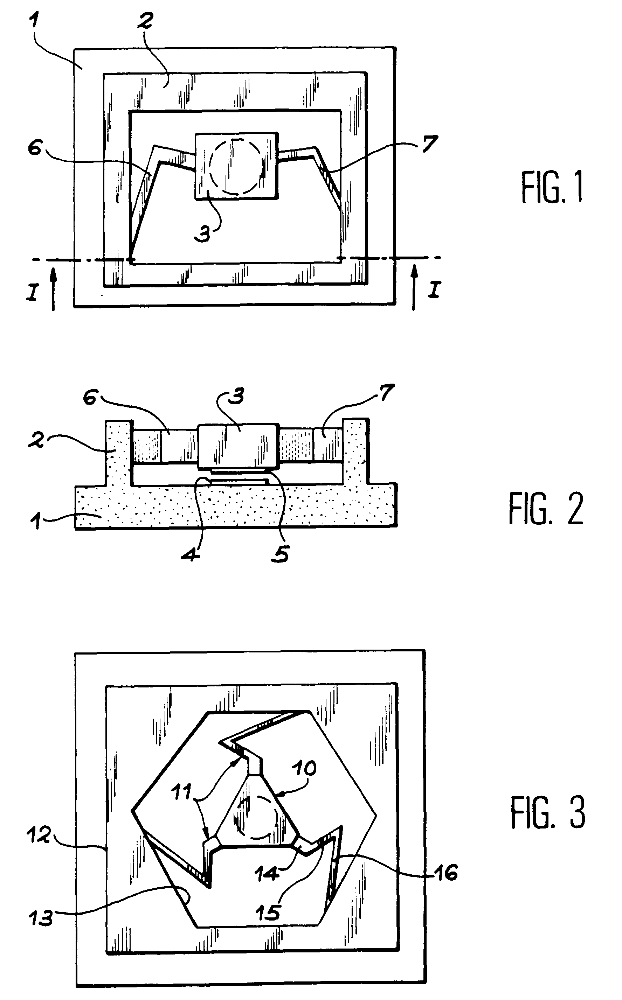

On distingue sur les figures 1 et 2 un support 1 massif, un cadre 2 également massif, rectangulaire, collé par métallisation sur le support 1 par sa face inférieure ou d'un bloc avec lui, une masselotte 3 entourée par le cadre 2 et à quelque distance du support 1, une électrode inférieure 4 déposée sur le support 1, une électrode supérieure 5 déposée sous la masselotte 3, et deux ailettes 6 et 7 réunies par leurs extrémités au cadre 2 et à la masselotte 3 et destinées à la suspension de celle-ci. Le support 1, les électrodes 4 et 5 et les ailettes 6 et 7 s'étendent essentiellement dans des plans horizontaux avec la représentation choisie.

Les électrodes 4 et 5 sont reliées par des connexions électriques non représentées à un système de mesure ; elles sont toutes deux circulaires, de même diamètre et viennent parfaitement en face l'une de l'autre quand le capteur est au repos, mais toute accélération déplace l'électrode supérieure 5 à cause de l'inertie de la masselotte 3 et de la souplesse des ailettes 6 et 7, et un changement de capacité peut être mesuré, qui dépend du déplacement de l'électrode supérieure 5 mais pas de sa direction, à cause de la concentricité et de la circularité des électrodes 4 et 5. De plus, le système constitué par la masselotte 3 et les ailettes 6 et 7 est tel qu'une accélération dans le plan horizontal produit un déplacement invariable quelle que soit la direction de l'accélération. Cette propriété résulte essentiellement des raideurs, des formes et des positions respectives des ailettes 6 et 7, qui sont ici des lames coudées sensiblement à angle droit, formées chacune d'une branche raccordée à la masselotte 3 avec une obliquité assez faible et d'une autre branche raccordée au cadre 2 avec une obliquité beaucoup plus grande, c'est-à-dire que les premières branches sont pratiquement radiales par rapport au centre des électrodes 4 et 5 et les autres branches sont plutôt tangentes à des cercles concentriques aux électrodes 4 et 5. Les ailettes 6 et 7 sont évidemment beaucoup plus minces dans la direction horizontale, où on désire mesurer les accélérations, que dans la direction verticale où on cherche à obtenir une très grande raideur qu'on peut admettre comme infinie, comme on le voit bien en comparant les figures 1 et 2.

Les ailettes 6 et 7 sont raccordées à des faces opposées de la masselotte 3 et du cadre 2 et l'ensemble a une allure quelque peu antisymétrique. On conçoit que de très nombreuses solutions peuvent être trouvées par l'homme de l'art car on dispose d'une grande liberté pour façonner les éléments du système. Il n'est pas question de les recenser toutes. Des systèmes à une seule ailette peuvent probablement être trouvés, mais l'inventeur ne s'est cependant intéressé qu'à des systèmes à plusieurs ailettes, car la propriété recherchée d'uniformité des raideurs est beaucoup plus facilement atteinte si les ailettes sont nombreuses, sans que la fabrication du capteur soit sensiblement plus compliquée, comme on le verra plus tard.

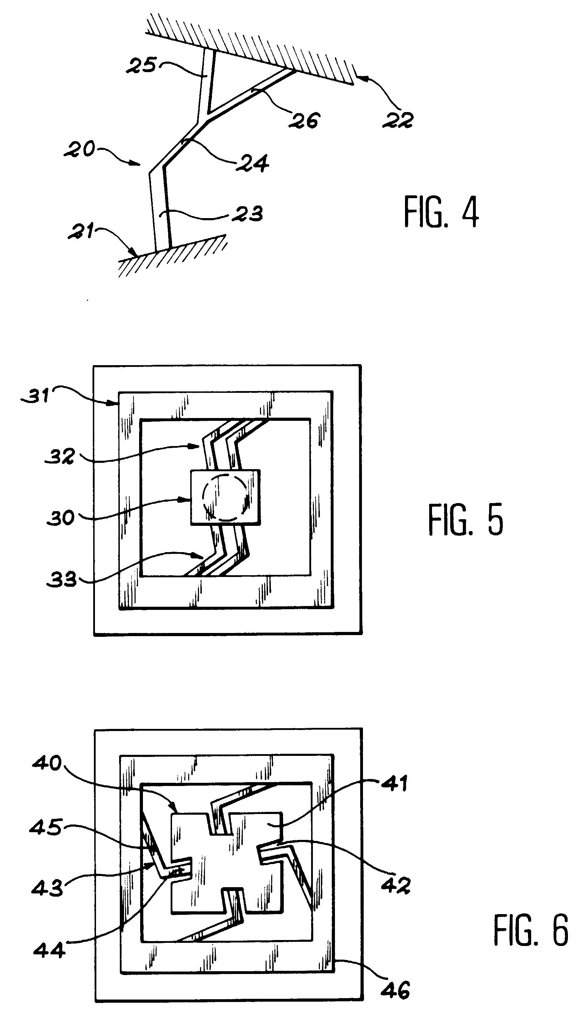

La figure 3 représente une masselotte 10 triangulaire avec des angles cassés où se raccordent trois ailettes semblables 11, par ailleurs raccordées à un cadre 12 présentant un bord interne 13 hexagonal. Les autres éléments ne diffèrent pas de ceux de la première réalisation. La structure obtenue est périodique en ce qui concerne la masselotte 10, les ailettes 11 et le bord interne 13 du cadre 12, et l'angle de périodicité est de 120°. Chacune des ailettes 12 se compose de trois parties : un raccord 14 court et massif à un angle cassé de la masselotte 10, une partie intermédiaire 15 mince et à angle droit avec le raccord 14, et une troisième partie 16 longue et mince raccordée à la partie intermédiaire 15 et au bord interne 13 du cadre 12 en formant deux angles aigus avec eux.

La figure 4 est un détail qui illustre une autre forme admissible d'ailettes 20 entre une masselotte 21 et un cadre 22 qui ne sont représentés que partiellement. L'ailette 20 comprend encore un raccord court et massif 23 raccordé à la masselotte 21 sensiblement à angle droit, une partie intermédiaire 24, mais la troisième partie raccordée au cadre 22 est ramifiée en deux branches 25 et 26 qui forment un angle aigu et ont une raideur globale importante. L'essentiel de la déformation est donc subi par la flexion de la partie intermédiaire 24.

On voit sur la figure 5 qu'une masselotte 30 et un cadre 31 semblables à ceux de la première réalisation peuvent être reliés par deux faisceaux 32 et 33 d'ailettes coudées analogues à celles des figures précédentes. Les ailettes de chacun des faisceaux sont semblables entre elles ou presque semblables et formées de branches parallèles aux branches correspondantes des autres ailettes du faisceau 32 ou 33.

La figure 6 montre qu'une possibilité intéressante pour rendre le système plus sensible consiste à utiliser une masselotte 40 formée de partie débordantes 41 qui alternent avec des indentations 42. Les ailettes 43, coudées comme dans les réalisations précédentes, se composent d'une partie 44 de liaison à la masselotte 40, qui s'étend dans une indentation 42 respective et est fixée au fond de celle-ci. L'autre partie 45 des ailettes 43 est reliée obliquement au cadre 46. On obtient donc une masselotte plus lourde sans devoir utiliser d'ailettes 43 plus courtes et donc moins souples. Le capteur est donc plus sensible que les précédents. Ici encore la structure est périodique, à 90Y cette fois-ci puisqu'il y a quatre ailettes 43 et que la masselotte 40 et le cadre 46 sont carrés.

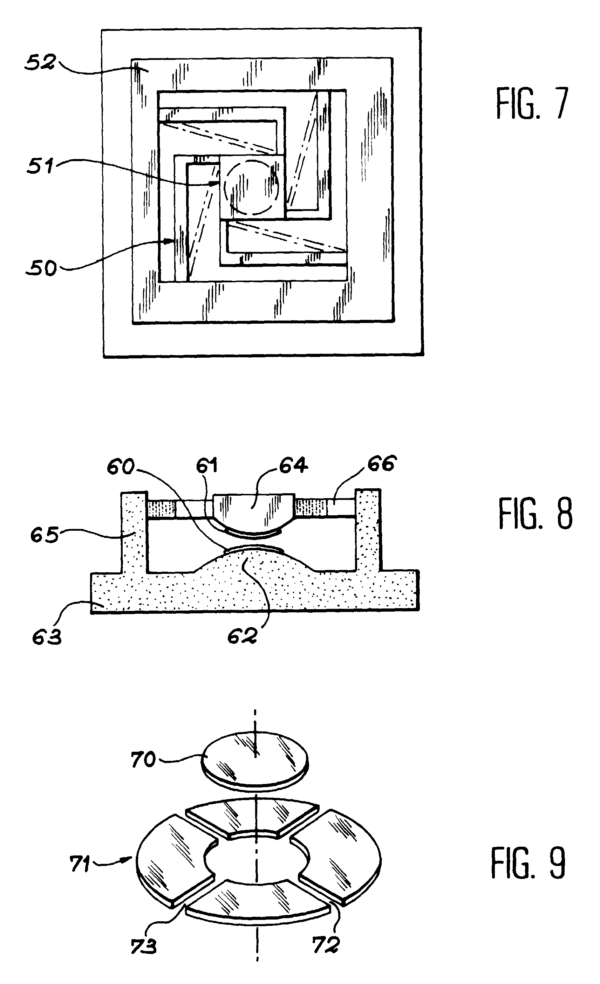

Une réalisation différente est représentée à la figure 7. Elle comporte quatre ailettes 50 encore coudées et formées de deux branches inégales, dont chacune est reliée à une extrémité d'un côté de la masselotte 51 et par l'autre extrémité près de l'extrémité d'un côté du cadre 52 ; la masselotte 51 et le cadre 52 sont carrés. L'ensemble déformable et élastique a une forme de svastika et son avantage fondamental réside dans une grande souplesse des longues ailettes 50.

Il serait encore concevable d'utiliser à la place des ailettes coudées de cette réalisation des ailettes rectilignes qui se raccorderaient au cadre 52 et à la masselotte 51 aux mêmes points, comme les tirets le représentent.

La figure 8 montre que les électrodes peuvent n'être pas planes mais prendre d'autres formes, et par exemple être convexes toutes les deux. L'électrode inférieure 60 et l'électrode supérieure 61 sont ici déposées sur une calotte sphérique 62 d'un support 63 plat par ailleurs et sur un fond en calotte sphérique d'une masselotte 64. Le cadre 65 et les ailettes 66 peuvent être conformes aux réalisations précédentes. Dans cette réalisation, les électrodes 60 et 61 restent concentriques de même diamètre et de même forme.

Une forme particulière d'électrodes est représentée à la figure 9. L'électrode supérieure 70 reste circulaire, mais l'électrode inférieure 71 est une couronne circulaire partagée en quatre régions identiques à la faveur de deux coupures diamétrales et perpendiculaires 72 et 73. On comprend immédiatement que si chacune des quatre régions a une connexion électrique particulière, la combinaison des capacités obtenues entre l'électrode supérieure 70 et chacune des régions de l'électrode inférieure 71 permettra de distinguer la direction de l'accélération, en comparant les capacités obtenues pour les régions opposées et les régions voisines. Une variante de cette configuration consiste à dissymétriser les quatre électrodes en remplaçant par exemple la couronne circulaire par une couronne elliptique de manière à obtenir une plus grande sensibilité dans une direction privilégiée.

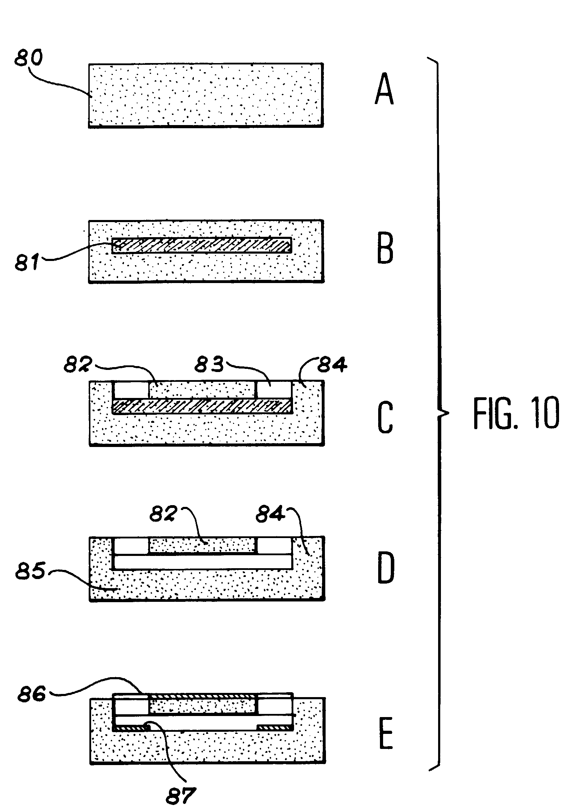

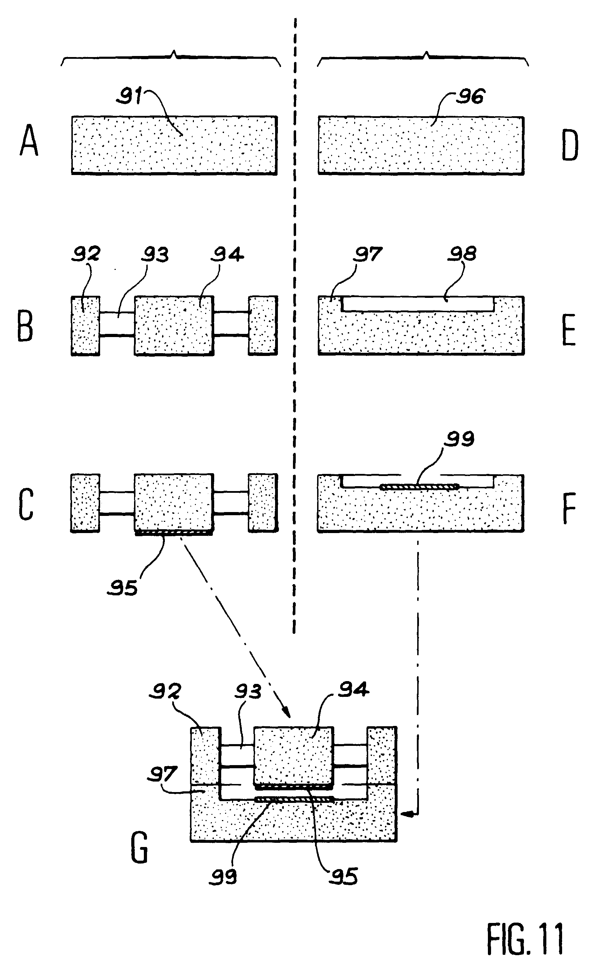

On termine la description sur les figures 10 et 11 qui représentent des étapes de fabrication du capteur. D'une façon générale on prévoit de recourir à des techniques usuelles en micro-électronique pour la fabrication de circuits intégrés afin d'obtenir de très petites dimensions et une grande précision. La figure 10A représente un bloc 80 destiné à former le capteur et en matériau isolant de l'électricité. On peut y créer à une certaine profondeur une couche 81 de matériau soluble par une implantation d'ions, sans cependant l'étendre jusqu'aux faces latérales du bloc 80 (figure 10B). Une gravure est ensuite entreprise jusqu'à la couche 81 dans des creux 83 pour isoler une portion centrale formant une masselotte 82 tout en laissant (figure 10C) subsister en outre des portions du matériau de base destinées à former le cadre 84 et les ailettes (entre les creux 83 qui sont invisible sur cette figure). Un masque est utilisé pour cela.

L'étape suivante est représentée à la figure 10D et consiste en une dissolution de la couche 81, de sorte que la masselotte 82 est maintenant parfaitement dégagée. Il suffit alors de déposer un matériau conducteur par métallisation pour former une électrode supérieure 86 sur la masselotte 82 et les ailettes et une électrode inférieure 87 sur la région circulaire du support 85 circonscrite par le cadre 84 et circonscrivant la masselotte 82. Il n'est en effet pas nécessaire que les électrodes 86 et 87 soient dirigées l'une vers l'autre, ni même qu'elles soient en face l'une de l'autre, comme on l'a représenté jusqu'à présent.

On s'intéresse maintenant aux figures 11. La figure 11A représente un bloc 91 qui est soumise à une gravure en plusieurs étapes dont on représente le résultat à la figure 11B : une portion supérieure du cadre 92 est formée en même temps que les ailettes 93 et la masselotte 94. Un métallisation est ensuite menée pour déposer une électrode supérieure 95 en dessous de la masselotte 94 (figure 11c). Un autre bloc 96 représenté à la figure 11D subit une gravure à son centre, qui laisse apparaître en relief la base 97 du cadre (figure 11E). Quand une métallisation représentée à la figure 11F a produit une électrode inférieure 99 au centre de la cuvette 98, la dernière étape consiste à coller les deux parties 92 et 97 du cadre entre elles pour obtenir le capteur de la figure 11G.

Dans cette réalisation, les deux blocs 91 et 96 étaient isolants de l'électricité. Il serait encore possible entre autres solutions qu'un des blocs soit conducteur. Il devrait alors être recouvert sur une partie de sa surface active d'un matériau isolant.

## Revendications

1. Capteur d'accélération comprenant deux électrodes (4, 5, 60, 61, 70, 71, 86, 87, 95, 99) composant un condensateur et dont l'une est sur un support fixe (1, 63, 85) et l'autre sur une masselotte mobile (3, 64, 94), caractérisé en ce que la masselotte est reliée à un cadre (2, 65, 92) solidaire du support par un système plan d'ailettes déformables (6, 7, 11, 20, 32, 33, 43, 50, 66, 83, 93) avec une raideur d'ensemble identique dans toutes les directions du plan et indéformables perpendiculairement au plan.

2. Capteur d'accélération suivant la revendication 1, caractérisé en ce que les électrodes sont concentriques selon un axe perpendiculaire au plan.

3. Capteur d'accélération suivant la revendication 2, caractérisé en ce que les électrodes sont planes.

4. Capteur d'accélération suivant l'une quelconque des revendications 2 ou 3, caractérisé en ce que les électrodes sont circulaires.

5. Capteur d'accélération suivant l'une quelconque des revendications 2 ou 3, caractérisé en ce qu'une des électrodes (71) est une couronne circulaire et divisée en quatre parties par deux diamètres de coupure perpendiculaires.

6. Capteur d'accélération suivant l'une quelconque des revendications 2 ou 3, caractérisé en ce qu'une des électrodes est oblongue et divisée en quatre parties par deux axes principaux et perpendiculaires de coupure.

7. Capteur d'accélération suivant l'une quelconque des revendications 1 à 6, caractérisé en ce que les ailettes sont raccordées obliquement au cadre et à la masselotte.

8. Capteur d'accélération suivant l'une quelconque des revendications 1 à 7, caractérisé en ce que les ailettes sont coudées.

9. Capteur d'accélération suivant l'une quelconque des revendications 1 à 8, caractérisé en ce que les ailettes (11, 43, 50) sont identiques et régulièrement réparties angulairement.

10. Capteur d'accélération suivant l'une quelconque des revendications 1 à 9, caractérisé en ce que les ailettes sont groupées en faisceaux (32, 33), les ailettes d'un faisceau étant parallèles entre elles.

11. Capteur d'accélération suivant l'une quelconque des revendications 1 à 10, caractérisé en ce que les ailettes (20) sont ramifiées.

12. Capteur d'accélération suivant l'une quelconque des revendications 1 à 11, caractérisé en ce que la masselotte (40) comprend des parties débordant entre les ailettes (43).

## Patentansprüche

1. Beschleunigungsmeßaufnehmer, zwei einen Kondensator bildende Elektroden (4, 5, 60, 61, 70, 71, 86, 87, 95, 99) umfassend, davon die eine auf einem feststehenden Träger und die andere auf einem beweglichen Massenelement (3, 64, 94),
**dadurch gekennzeichnet,**
daß das Massenelement mit einem Rahmen (2, 65, 92) verbunden ist, der an dem Träger befestigt ist durch ein flaches System aus verformbaren Rippen (6, 7, 11, 20, 32, 33, 43, 50, 66, 83, 93) mit einer in allen Richtungen der Ebene identischen Steifigkeit und senkrecht zu der Ebene nicht verformbar.

2. Beschleunigungsmeßaufnehmer nach Anspruch 1, dadurch gekennzeichnet, daß die Elektroden entsprechend einer zu der Ebene senkrechten Achse konzentrisch sind.

3. Beschleunigungsmeßaufnehmer nach Anspruch 2, dadurch gekennzeichnet, daß die Elektroden eben bzw. flach sind.

4. Beschleunigungsmeßaufnehmer nach einem der Ansprüche 2 oder 3, dadurch gekennzeichnet, daß die Elektroden kreisförmig sind.

5. Beschleunigungsmeßaufnehmer nach einem der Ansprüche 2 oder 3, dadurch gekennzeichnet, daß eine der Elektroden (71) ein kreisförmiger Kranz ist, unterteilt in vier Teile durch zwei senkrechte Trennungsdurchmesser.

6. Beschleunigungsmeßaufnehmer nach einem der Ansprüche 2 oder 3, dadurch gekennzeichnet, daß eine der Elektroden länglich ist und in vier Stücke geteilt wird durch zwei senkrechte Haupttrennungsachsen.

7. Beschleunigungsmeßaufnehmer nach einem der Ansprüche 1 bis 6, dadurch gekennzeichnet, daß die Rippen mit dem Rahmen und dem Massenelement schräg verbunden sind.

8. Beschleunigungsmeßaufnehmer nach einem der Ansprüche 1 bis 7, dadurch gekennzeichnet, daß die Rippen gekrümmt sind.

9. Beschleunigungsmeßaufnehmer nach einem der Ansprüche 1 bis 8, dadurch gekennzeichnet, daß die Rippen (11, 43, 50) identisch sind und winkelmäßig gleichmäßig verteilt sind.

10. Beschleunigungsmeßaufnehmer nach einem der Ansprüche 1 bis 9, dadurch gekennzeichnet, daß die Rippen bündelartig zusammengefaßt sind (32, 33), wobei die Rippen eines Bündels parallel zueinander sind.

11. Beschleunigungsmeßaufnehmer nach einem der Ansprüche 1 bis 10, dadurch gekennzeichnet, daß die Rippen (20) verzweigt sind.

12. Beschleunigungsmeßaufnehmer nach einem der Ansprüche 1 bis 11, dadurch gekennzeichnet, daß das Massenelement (40) Teile umfaßt, die zwischen den Rippen (43) vorstehen.

## Claims

1. Acceleration sensor including to electrodes (4,5,60,61, 70,71,86,87,95,99) comprising a capacitor, one electrode being located on a fixed support (1,63,85) and the other on a mobile feeder (3,64,94), characterized in that the feeder is connected to a frame (2,65,92) integral with the support by means of a plane system of ductile blades (6,7,11,20,32,33,43,50,66,83,93) with an identical regidity as regards all the directions of the plane and dimensionally stable perpendicular to the plane.

2. Acceleration sensor according to claim 1, characterized in that the electrodes are concentric along an axis perpendicular to the plane.

3. Acceleration sensor according to claim 2, characterized in that the electrodes are flat.

4. Acceleration sensor according to either of the claims 2 or 3, characterized in that the electrodes are circular.

5. Acceleration sensor according to either of the claims 2 or 3, characterized in that one of the electrodes (71) is a circular crown and divided into four portions via two perpendicular cutting diameters.

6. Acceleration sensor according to either of the claims 2 or 3, characterized in that one of the electrodes is oblong and divided into four portions by two main and perpendicular cutting axes.

7. Acceleration sensor according to any one of the claims 1 to 6, characterized in that the blades are connected obliquely to the frame and the feeder.

8. Acceleration sensor according to any one of the claims 1 to 7, characterized in that the blades are bent.

9. Acceleration sensor according to any one of the claims 1 to 8, characterized in that the blades (11,43,50) are identical and regularly distributed angularly.

10. Acceleration sensor according to any one of the claims 1 to 9, characterized in that the blades are grouped into bundles (32,33), the blades of a bundle being parallel to one another.

11. Acceleration sensor according to any one of the claims 1 to 10, characterized in that the blades (20) are branched.

12. Acceleration sensor according to any one of the claims 1 to 11, characterized in that the feeder (40) includes portions opening between the blades (43).
